# EUROPEAN PATENT APPLICATION

(11) **EP 4 597 030 A1**
(43) Date of publication of application: **06.08.2025**
(21) Application number: 23876677.8
(22) Date of filing: 10.10.2023
(51) Int. Cl.: G01B 17/02, G01N 29/00

(54) **COMPOUND POSITIONING METHOD FOR ULTRASONIC PIPETTING FOCAL POINT**

(30) Priority: 11.10.2022 CN 202211239315
(71) Applicant: Beijing Qingyuan Kaiwu Technology Co., Ltd, Beijing 100070 (CN); THE INSTITUTE OF ACCOUSTISC OF THE CHINESE ACADEMY OF SCIENCES, Beijing 100190 (CN)
(72) Inventor: BAI, Lixin, Beijing 100070 (CN); WANG, Dong, Beijing 100070 (CN); LIN, Weijun, Beijing 100070 (CN)
(74) Representative: Frick, Robert
(86) International application number: PCT/CN2023/123690
(87) International publication number: WO 2024/078475

(57) **Abstract**

A compound positioning method for an ultrasonic pipetting focal point, belonging to the technical field of ultrasonic pipetting, and comprising: providing on a pore plate a liquid to be tested, and providing below the pore plate a focused transducer; the focused transducer transmitting a low-intensity sound wave and, on the basis of an echo condition, determining a direction in which the focused transducer needs to be moved; moving the focused transducer in said direction and proceeding to test an echo, resuming the movement in said direction if the echo is enhanced or performing a movement in the reverse direction if the echo is weakened and, after several reciprocating movements, proceeding to increase the intensity of the low-intensity sound wave until a liquid surface fluctuates and echo oscillation occurs; and moving the focused transducer in any one direction to measure the echo oscillation, resuming the movement in this direction if the echo oscillation is enhanced or performing a movement in the reverse direction if the echo oscillation is weakened and, after several reciprocating movements, determining an ultrasonic pipetting focal point. In the method, there is no need to know the velocities of sound in liquid media, and the liquid to be tested is excited while the pore plate is located, thus simplifying the structure and reducing the cost.

## Description

### Technical Field

The present invention relates to a compound positioning method for an ultrasonic pipetting focal point, belonging to the technical field of ultrasonic pipetting.

### Background Art

With the development of biomedical science and technology, the scarcity and high cost of experimental samples, the huge number of experiments and the increase of labor costs have become a prominent contradiction. Automatic micro-sampling devices have become essential ones for many biochemical laboratories. Among them, an ultrasonic micro-sampling technology is an important means for micro-sampling due to its characteristics such as high precision and full automation.

In the process of ultrasonic micro-sampling, a focal point of an ultrasonic focal length transducer must be located on a liquid surface of a pore plate to sample normally. However, due to the weak energy of the focal length transducer in an area other than the focal point, it is difficult to obtain an echo by means of single pulse, and only the number of wave columns can be increased. Such an echo is a slowly changing wave packet, and a peak position range of the wave packet is wider, so it is very difficult to precisely determine a distance. Of course, the position of the focal point can also be determined according to the intensity of the echo by means of the characteristic of energy concentration of a focused transducer at the focal point. However, due to the processing and focusing characteristics of the transducer, a focal column with a certain length is formed at the focal point, and such a point makes the intensity of the echo insensitive near the focal point and affects the precision. In addition, high-intensity ultrasound can also be used to make the liquid surface fluctuate, and it is determined, according to a fluctuation range, whether the focal point is at the liquid surface. However, this method is only effective when the focal point has been near the liquid surface, and cannot be used alone.

### Summary of the Invention

For solving the above-mentioned problems, the object of the present invention is to provide a compound positioning method for an ultrasonic pipetting focal point. According to the present invention, there is no need to know the velocities of sound in liquid media in advance, thus reducing operation processes; and the transducer is located below the pore plate, which can excite a liquid to be tested while locating the pore plate, thus simplifying the structure and reducing the cost.

In order to achieve the above-mentioned object, the present invention provides the following technical solutions: a compound positioning method for an ultrasonic pipetting focal point includes: providing in a hole above a pore plate a liquid to be tested, providing below the pore plate a focused transducer, estimating a position of the focused transducer according to a focal length of the focused transducer, and moving the focused transducer to the position; the focused transducer transmitting a low-intensity sound wave and, on the basis of an echo condition, determining a direction in which the focused transducer needs to be moved; moving the focused transducer in said direction and proceeding to test an echo, resuming the movement in said direction if the echo is enhanced or performing a movement in the reverse direction if the echo is weakened and, after several reciprocating movements, proceeding to increase the intensity of the low-intensity sound wave until a liquid surface fluctuates and echo oscillation occurs; and moving the focused transducer in any one direction to measure the echo oscillation, resuming the movement in this direction if the echo oscillation is enhanced or performing a movement in the reverse direction if the echo oscillation is weakened and, after several reciprocating movements, causing an ultrasonic pipetting focal point to be close to the liquid surface, and causing the focused transducer to be located on an optimal position for ultrasonic pipetting.

Further, if the echo is not received after the focused transducer transmits the low-intensity sound wave, the intensity of the low-intensity sound wave is increased until the echo is received.

Further, the method of on the basis of an echo condition, determining a direction in which the focused transducer needs to be moved includes: on the basis of the echo condition, estimating a distance between the transducer and the liquid surface, and comparing the distance with a preset focal length of the focused transducer, thereby determining a movement direction of the focused transducer.

Further, the number of the reciprocating movements is two.

Further, the focused transducer is moved by preset steps, and steps that the focused transducer is moved for the first time are different from steps that the focused transducer is moved for the second time.

Further, the low-intensity sound wave includes several wave trains and, when the distance between the transducer and the liquid surface is estimated, the number of the wave trains is 50-2000.

Further, a height of the liquid surface is calculated according to the focal length of the focused transducer or the measured distance between the focused transducer and the liquid surface and a distance between the focused transducer and the bottom of the pore plate or the distance between the focused transducer and the liquid surface and the distance between the focused transducer and the bottom of the pore plate.

Further, a calculation formula for the height of the liquid surface is expressed as:
the height of the liquid surface=the focal length of the focused transducer or the distance between the focused transducer and the liquid surface-the distance between the transducer and the bottom of the pore plate.

Due to the adoption of the above-mentioned technical solutions, the present invention has the following advantages: according to the present invention, there is no need to know the velocities of sound in liquid media in advance, thus reducing operation processes; and the transducer is located below the pore plate, which can excite a liquid to be tested while locating the pore plate, thus simplifying the structure and reducing the cost.

### Brief Description of the Drawings

Fig. 1 is a flow diagram of a compound positioning method for an ultrasonic pipetting focal point in an embodiment of the present invention;
Fig. 2 is a schematic diagram of an ultrasonic ranging positioning method in an embodiment of the present invention;
Fig. 3 is a schematic diagram of an intensity positioning method for an ultrasonic pipetting focal point in an embodiment of the present invention, wherein a focal point in Fig. 3(a) is located below a liquid surface, a focal point in Fig. 3(b) is near a liquid surface, and a focal point in Fig. 3(c) is located above a liquid surface; and
Fig. 4 is a schematic diagram of a liquid surface fluctuation positioning method for an ultrasonic pipetting focal point in an embodiment of the present invention.

### Detailed Description of the Invention

In order to make the skilled in the art better understand the technical solutions of the present invention, the present invention will be described in detail with specific embodiments. However, it should be understood that the specific implementations are provided for the purpose of better understanding the present invention only, and they should not be understood as limitations on the present invention. In the description of the present invention, it should be understood that used terms are for descriptive purposes only, and cannot be understood as indicating or implying the relative importance.

In order to solve the problem in the prior art that this method is only effective when the focal point has been near the liquid surface, and cannot be used alone, the present invention provides a compound positioning method for an ultrasonic pipetting focal point, by which a position of a focused transducer is estimated and, on the basis of an echo condition, a direction in which the focused transducer needs to be moved is determined; the focused transducer is moved in said direction and proceeding to test an echo is performed; the focused transducer is moved in any one direction to measure echo oscillation, the movement in this direction is resumed if the echo oscillation is enhanced or a movement in the reverse direction is performed if the echo oscillation is weakened and, after several reciprocating movements, an ultrasonic pipetting focal point is caused to be close to the liquid surface, and the focused transducer is caused to be located on an optimal position for ultrasonic pipetting. According to the present invention, there is no need to know the velocities of sound in liquid media in advance, thus reducing operation processes; and the transducer is located below the pore plate, which can excite a liquid to be tested while locating the pore plate, thus simplifying the structure and reducing the cost. Below, the solutions in the present invention will be described in detail with embodiments in conjunction with the accompanying drawings.

### Embodiment

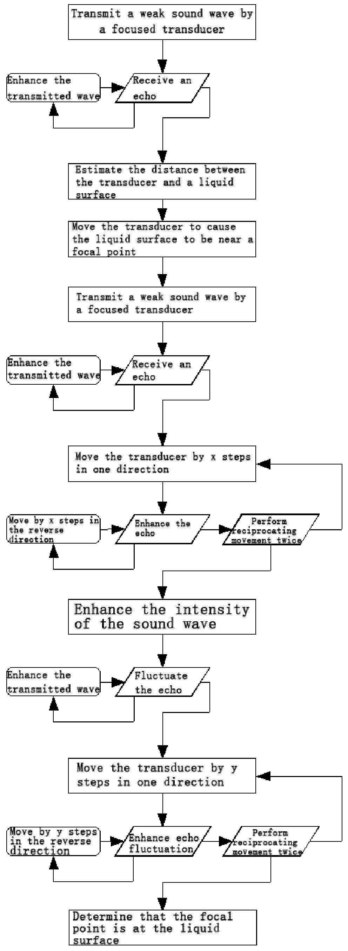

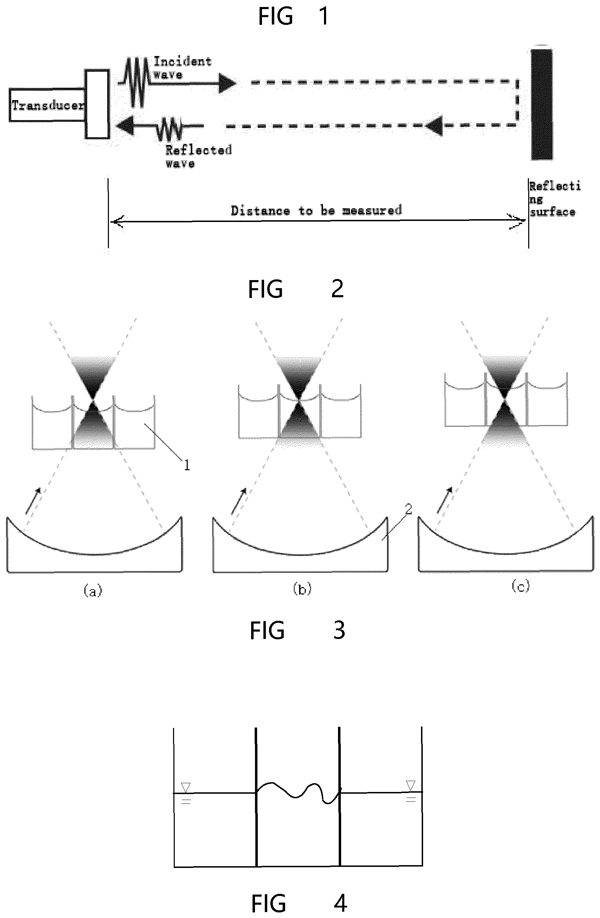

The present embodiment discloses a compound positioning method for an ultrasonic pipetting focal point, as shown in Fig. 1, including the following steps.

S1, a liquid to be tested is provided in a hole above a pore plate, and a focused transducer is provided below the pore plate.

S2, estimation is performed according to a focal length of the focused transducer and the focused transducer is moved to an estimated position, the focused transducer transmits a low-intensity sound wave and, on the basis of an echo condition, a direction in which the focused transducer needs to be moved is determined, if an echo is not received after the focused transducer transmits the low-intensity sound wave, the intensity of the low-intensity sound wave is increased until the echo is received and, and on the echo condition, the direction in which the focused transducer needs to be moved is determined. In the present embodiment, a sound wave transmitted when a voltage applied to the focused transducer is 0.5-2 V is the low-intensity sound wave.

The method that on the basis of an echo condition, a direction in which the focused transducer needs to be moved is determined includes: on the basis of the echo condition, a distance between the transducer and the liquid surface is estimated, and the distance is compared with a preset focal length of the focused transducer, thereby determining a movement direction of the focused transducer.

As shown in Fig. 2, ultrasonic ranging means that the transducer is used to emit a train of sound wave, after being emitted, the sound wave is reflected by a reflecting surface and is transmitted back to the transducer, and the transducer receives an echo of this train of sound wave. A distance between the transducer and the reflecting surface can be calculated by measuring time from the emission of the train of wave to the reception of the train of the wave, and then multiplying the time by a velocity of a sound wave in medium. This method requires that the transducer must be located on a surface opposite to the reflecting surface, the position of the transducer is limited, and the composition and concentration of a liquid forming the reflecting surface will also interfere with the reflected wave.

In order to solve the problems such as limitations on the position of the transducer and impacts of a reflecting liquid surface on the reflected wave, the variation of the distance between the transducer and the liquid surface can be measured in real time to precisely position the pore plate loading a liquid, thereby facilitating subsequent operations. When a height of the liquid surface is a constant value, a distance between the bottom of the pore plate and the transducer is measured, a conventional transducer is changed into the focused transducer, and the transducer is located on the same side as the reflecting surface, in this way, a focusing point will be formed on a front end of the transducer. An ultrasonic wave forms an echo after passing through the bottom of the liquid on the reflecting surface and reaching the reflecting surface, and when the focusing point overlaps with the reflecting surface, the energy of the echo is the strongest. By measuring the intensity of the echo, a relative positional relationship between the reflecting surface and a focal point is inferred to determine whether the reflecting surface is higher or lower than the focal point or various conditions that the reflecting surface overlaps with the focal point. Since the focal point is given, when the liquid surface overlaps with the focal point, the height of the liquid surface is constant, and therefore, it is proven that the pore plate has reached a designated position at the time.

S3, the focused transducer is moved in said direction and proceeding to test an echo is performed, wherein the focused transducer is moved by preset steps x; and the focused transducer is moved by the preset steps, and the movement positioning precision is less than 0.05 mm. The movement in said direction is resumed if the echo is enhanced or a movement in the reverse direction is performed if the echo is weakened and, after several reciprocating movements, the focal point of the focused transducer is caused to be closer to the position of the liquid surface, proceeding to increase the intensity of the low-intensity sound wave is performed until the liquid surface fluctuates and echo oscillation occurs. In the present embodiment, the number of the reciprocating movements is two, but is not limited thereto.

As shown in Fig. 3, the focused transducer can also be used for measuring a distance by adopting the above-mentioned method. However, the focused transducer further has a characteristic that sound wave is gathered at the focal point so that energy is highly centralized, and the echo has a great intensity difference when the reflecting surface is located at the focal point and the reflecting surface is not located at the focal point. Due to such a characteristic, the position of the focal point can be measured sensitively and accurately. This method is unrelated to the property of the medium and the velocity of sound. Since the focal length is given, when the reflecting surface is just located at the focal point, ranging can be performed. However, when the reflecting surface is not located at the focal point, this method cannot be used for ranging.

S4, as shown in Fig. 4, the focused transducer is moved in any one direction, wherein the focused transducer is moved by preset steps y; the focused transducer is moved by the preset steps, and the movement positioning precision is less than 0.05 mm. The echo oscillation is measured, the movement in this direction is resumed if the echo oscillation is enhanced or a movement in the reverse direction is performed if the echo oscillation is weakened and, after several reciprocating movements, a position of an ultrasonic pipetting focal point is caused to be closer to the liquid surface, and the focused transducer is caused to be located on an optimal position for ultrasonic pipetting. In the present embodiment, the number of the reciprocating movements is two, but is not limited thereto. Steps that the focused transducer is moved at a first stage according to the intensity of the echo can be the same as or different from steps that the focused transducer is moved at a second stage according to the fluctuation intensity of the liquid surface. However, in the present embodiment, preferably, the steps that the focused transducer is moved at the first stage according to the intensity of the echo are different from the steps that the focused transducer is moved at the second stage according to the fluctuation intensity of the liquid surface.

After the position of the transducer is adjusted according to the above-mentioned steps, a height of the liquid surface can be calculated according to the focal length of the focused transducer or the measured distance between the transducer and the liquid surface and a distance between the transducer and the bottom of the pore plate; and a calculation formula for the height of the liquid surface is expressed as:
the height of the liquid surface=the distance between the transducer and the liquid surface (the focal length of the transducer)-the distance between the transducer and the bottom of the pore plate.

When the distance between the transducer and the liquid surface is estimated, a transmitted wave is not required to be a single-pulse or single-train wave or several trains of waves with a limited number. In order to increase the energy of the sound wave, the transmitted wave may be a larger number of wave trains with values ranging from 50 to 2000.

In the present embodiment, it is mainly determined whether the focal point is at the liquid surface, and after it is determined that the focal point is at the liquid surface, a distance between the ultrasonic pipetting focal point and the liquid surface can be calculated according to the determined position of the ultrasonic pipetting focal point, and thus, the height of the liquid surface is measured.

Finally, it should be noted that the above-mentioned embodiments are only intended to illustrate the technical solutions of the present invention, rather than to limit them. Although the present invention has been described in detail by reference to the above-mentioned embodiments, it should be understood by those of ordinary skill in the art that it is still possible to modify or equivalently substitute specific implementations of the present invention, and any modifications or equivalent substitutions without departing from the spirit and scope of the present invention shall fall within the protective scope defined in the claims of the present invention. The above-mentioned contents are only specific implementations of the present invention, but the protective scope of the present invention is not limited thereto. Any variations or substitutions that can be readily envisioned by those skilled in the art within the technical scope disclosed by the present invention shall fall within the protective scope of the present invention. Therefore, the protective scope of the present invention should be subject to the protective scope defined in the claims.

## Claims

1. A compound positioning method for an ultrasonic pipetting focal point, **characterized by** comprising:
providing in a hole above a pore plate a liquid to be tested, providing below the pore plate a focused transducer, estimating a position of the focused transducer according to a focal length of the focused transducer, and moving the focused transducer to the position;
the focused transducer transmitting a low-intensity sound wave and, on the basis of an echo condition, determining a direction in which the focused transducer needs to be moved;
moving the focused transducer in said direction and proceeding to test an echo, resuming the movement in said direction if the echo is enhanced or performing a movement in the reverse direction if the echo is weakened and, after several reciprocating movements, proceeding to increase the intensity of the low-intensity sound wave until a liquid surface fluctuates and echo oscillation occurs; and
moving the focused transducer in any one direction to measure the echo oscillation, resuming the movement in this direction if the echo oscillation is enhanced or performing a movement in the reverse direction if the echo oscillation is weakened and, after several reciprocating movements, causing an ultrasonic pipetting focal point to be close to the liquid surface, and causing the focused transducer to be located on an optimal position for ultrasonic pipetting.

2. The compound positioning method for an ultrasonic pipetting focal point of claim 1, **characterized in that** if the echo is not received after the focused transducer transmits the low-intensity sound wave, the intensity of the low-intensity sound wave is increased until the echo is received.

3. The compound positioning method for an ultrasonic pipetting focal point of claim 1, **characterized in that** the method of on the basis of an echo condition, determining a direction in which the focused transducer needs to be moved comprises: on the basis of the echo condition, estimating a distance between the transducer and the liquid surface, and comparing the distance with a preset focal length of the focused transducer, thereby determining a movement direction of the focused transducer.

4. The compound positioning method for an ultrasonic pipetting focal point of claim 3, **characterized in that** the number of the reciprocating movements is two.

5. The compound positioning method for an ultrasonic pipetting focal point of claim 4, **characterized in that** the focused transducer is moved by preset steps, and steps that the focused transducer is moved for the first time are different from steps that the focused transducer is moved for the second time.

6. The compound positioning method for an ultrasonic pipetting focal point of any one of claims 3 to 5, **characterized in that** the low-intensity sound wave comprises several wave trains and, when the distance between the transducer and the liquid surface is estimated, the number of the wave trains is 50-2000.

7. The compound positioning method for an ultrasonic pipetting focal point of any one of claims 1 to 5, **characterized in that** a height of the liquid surface is calculated according to the focal length of the focused transducer or the measured distance between the focused transducer and the liquid surface and a distance between the focused transducer and the bottom of the pore plate or the distance between the focused transducer and the liquid surface and the distance between the focused transducer and the bottom of the pore plate.

8. The compound positioning method for an ultrasonic pipetting focal point of claim 7, **characterized in that** a calculation formula for the height of the liquid surface is expressed as:
the height of the liquid surface=the focal length of the focused transducer or the distance between the focused transducer and the liquid surface-the distance between the transducer and the bottom of the pore plate.
